# EUROPEAN PATENT APPLICATION

(11) **EP 3 893 035 A1**
(43) Date of publication of application: **13.10.2021**
(21) Application number: 19893080.2
(22) Date of filing: 05.06.2019
(51) Int. Cl.: G02B 6/42, G02B 6/38

(54) **CONNECTOR PLUG AND ACTIVE OPTICAL CABLE ASSEMBLY USING SAME**

(30) Priority: 04.12.2018 KR 20180154251
(71) Applicant: Lipac Co., Ltd., Seoul 08790 (KR)
(72) Inventor: LEE, Sang Don, Guri-si Gyeonggi-do 11948 (KR)
(74) Representative: Lambacher, Michael
(86) International application number: PCT/KR2019/006775
(87) International publication number: WO 2020/116731

(57) **Abstract**

The present invention relates to an optical connector plug and an active optical cable (AOC) assembly using same, the optical connector plug being capable of easily achieving even passive alignment of an optical component that allows an optical signal to be transmitted between an optical fiber and a light engine by integrally forming an optical fiber alignment guide for automatically aligning and positioning an optical device and the optical fiber on one surface of an optical device module having the optical device embedded therein. The connector plug according to the present invention comprises: the optical device module having a light engine for generating or receiving an optical signal an optical signal; an optical fiber alignment guide member formed on one surface of the optical device module so as to form an optical fiber insertion channel having at least one optical fiber seated thereon; and an optical component provided in the optical device module to transmit an optical signal between the optical fiber and the light engine.

## Description

### TECHNICAL FIELD

The present invention relates to a connector plug, and more particularly, to a connector plug and an active optical cable (AOC) assembly using the connector plug, which can assemble an optical fiber and an optical component by using an optical fiber alignment guide member and an optical component alignment guide which are formed on one surface of an optical device module, to thereby facilitate passive alignment of optical components.

### BACKGROUND ART

A light engine is typically used to transmit data at high speed. The light engine includes hardware units for converting an electrical signal to an optical signal, transmitting the optical signal, receiving the optical signal, and converting the optical signal back into an electrical signal. An electrical signal is converted to an optical signal when the electrical signal is used to be modulated in a light source device such as a laser unit. Light from a light source is coupled to a transmission medium such as an optical fiber. After passing through an optical network and reaching its destination through various optical transmission media, the light is coupled to a receiving device such as a detector. The detector generates an electrical signal based on the received optical signal for use by a digital processing circuit.

Optical communication systems are often used to transmit data in various systems, such as electrical telecommunication systems and data communication systems. The electrical telecommunication systems often involve the transmission of data over a wide geographical distance ranging from a few miles to thousands of miles. The data communication systems often involve the transmission of data through a data center. Such systems include the transmission of data over distances ranging from a few meters to hundreds of meters. A coupling component that is used to transmit an electrical signal as an optical signal and that transfers the optical signal to an optical transmission medium such as an optical cable is relatively expensive. Because of this cost, optical transmission systems are typically used as the backbone of a network that transmits large amounts of data over long distances.

Meanwhile, current computer platform architecture designs can encompass several different interfaces to connect one device to another. These interfaces provide input/output (I/O) to computing devices and peripheral devices, and can use a variety of protocols and standards to provide I/O. Different interfaces may use different hardware structures to provide interfaces. For example, current computer systems typically have multiple ports with corresponding connection interfaces, which are implemented by physical connectors and plugs at the ends of the cables connecting the devices.

A universal connector type may be provided with a universal serial bus (USB) subsystem having multiple associated USB plug interfaces, DisplayPort, High Definition Multimedia Interface (HDMI), Firewire (as defined in IEEE 1394), or other connector types.

In addition, for transmission of very large-capacity data at a very high speed between two separate devices such as a UHD television (TV) using a set-top box, an electrical and optical input/output interface connector is required.

Furthermore, when a large amount of data needs to be transmitted and received between a board and another board in a UHD television, a miniaturized and slimmed optical interface connector with a thickness of 1 mm is required.

That is, in order to achieve high-speed transmission while satisfying a thin form factor in a TV or the like, the size of an active optical cable (AOC) connector or the size of a light engine embedded in the AOC should be as thin as 1 mm or less. However, since the conventional AOC is packaged on a printed circuit board (PCB) in a bonding or Chip On Board (COB) form, it is difficult to realize a thin thickness.

AOC, which meets these requirements, is now being offered at a high price, but since such a high price is dominated by additional active alignment costs due to the inaccurate alignment between PCBs, optical devices (photodiode (PD)/vertical-cavity surface-emitting laser (VCSEL) devices), optical components (lenses or mirrors), or optical fibers, it requires a lot of costs to construct and assemble an accurate structure for passive alignment.

In addition, it is required to solve the performance degradation caused by wire-bonding of optical devices (PD/VCSEL) for high-speed interconnection of several tens giga to 100 giga or more.

Korean Patent Application Publication No. 10-2014-0059869 (Patent Document 1) discloses an input/output (I/O) device comprising: an I/O connector including both electric and optical I/O interfaces, wherein the optical I/O interface includes at least one optical lens; at least one optical fiber a first end of which is terminated at the I/O connector and optically coupled to the at least one optical lens; and a transceiver module that converts optical signals to electrical signals and includes at least one lens wherein a second end of the at least one optical fiber is terminated at the transceiver module and wherein the I/O connector and the transceiver module are not in contact with each other.

In the I/O device of Patent Document 1, since optical devices such as a light engine and driving chips are assembled by using a printed circuit board, automation for achieving high accuracy and productivity is difficult, and miniaturization and slimness are difficult.

Generally, an optical communication module should include: a mechanical device capable of fixing an optical cable for transmitting an optical signal; an optical device for converting an optical signal transmitted via the optical cable into an electrical signal or converting an optical signal for transmission via the optical cable from an electrical signal; and an interface circuit for transmitting and receiving information with respect to the optical device.

In a conventional optical communication module, since optical cable fixing members, optical devices, and interface circuit chips are separately arranged and spaced apart from each other on a circuit board by a separate process, the area occupied by the circuit board is widened, the manufacturing process is complicated, and the electrical signals provided by the optical devices are provided to an optoelectronic circuit through conductive strips formed on the circuit board, so that the electrical signals may be degraded.

### DISCLOSURE

### TECHNICAL PROBLEM

Therefore, to solve the above-described problems, it is an object of the present invention to provide a connector plug and an active optical cable (AOC) assembly using the connector plug, which can assemble an optical fiber and an optical component by using an optical fiber alignment guide member and an optical component alignment guide which are formed on one surface of an optical device module, to thereby facilitate passive alignment of optical components.

It is another object of the present invention to provide a connector plug having a simple structure in which an assembly of an optical device module, an optical fiber, and an optical component can be combined with a minimum number of components by an assembly process, and an active optical cable (AOC) assembly using the connector plug.

It is another object of the present invention to provide a connector plug and an active optical cable (AOC) assembly using the same, wherein an optical fiber assembly channel having an open structure is integrally formed on one surface of an optical device module by using an optical fiber alignment guide member, to then assemble optical fiber, and the alignment between the optical device and the optical component and the alignment between the optical component and the optical fiber are can have a high accuracy without misalignment by using a passive alignment technique, even though individual optical components are used.

It is another object of the present invention to provide a connector plug in which an optical fiber assembly channel having an open structure is integrally formed in an optical device module in the form of a system-in-package (SiP) type to package a light engine into a one-chip or a single device, and an active optical cable (AOC) assembly using the connector plug.

It is another object of the present invention to provide a connector plug capable of transmitting and receiving a large amount of data at an ultra-high speed and implementing a miniaturized and slimmed structure with a thickness of 1 mm while being manufactured at low cost, and an active optical cable (AOC) assembly using the same.

### TECHNICAL SOLUTION

A connector plug according to an embodiment of the present invention includes: an optical device module having a light engine that generates or receives an optical signal; an optical fiber alignment guide member formed on one surface of the optical device module to form an optical fiber insertion channel having at least one optical fiber seated thereon; and an optical component provided in the optical device module to transmit an optical signal between the optical fiber and the light engine.

The optical component may be a reflective mirror installed slantly at an angle of 45° to the surface of the optical device module. In this case, the reflective mirror may be a metal layer formed on a planar silicon substrate or resin substrate.

The connector plug according to an embodiment of the present invention may further include an optical component alignment guide installed in the optical device module and arranged at a predetermined distance from the optical fiber alignment guide member such that the optical component is arranged at an orthogonal point between the optical device of the light engine and the optical fiber.

One edge of the reflective mirror may come in contact with the surface of the optical device module and the other edge thereof may come in contact with the upper edge of the optical component alignment guide, in which the one edge of the reflection mirror may be positioned at a point spaced apart from the front end of the optical component alignment guide by a distance equal to the height of the optical component alignment guide.

The optical component may be a 45° reflective mirror or a concave type mirror having a reflective surface formed in a concave shape.

The optical component may be a right angle prism arranged at an orthogonal point between the optical device of the light engine and the optical fiber.

The connector plug according to an embodiment of the present invention may further include an optical component alignment guide member that serves as a stopper for aligning the right angle prism at an orthogonal point between the optical device of the light engine and the optical fiber.

The optical fiber alignment guide member may arrange the optical fiber mounted on the optical fiber insertion channel on the same line as the optical device of the light engine.

In addition, the optical component may be an optical path conversion element that converts the optical signal path by 90° and transmits light between the optical device of the light engine and the optical fiber.

The optical fiber alignment guide member may include a plurality of optical fiber alignment guides arranged at the same interval to form a plurality of optical fiber insertion channels into which the plurality of optical fibers are inserted.

The connector plug according to an embodiment of the present invention may further include a plurality of stopper protrusions formed at respective front end portions of the plurality of optical fiber insertion channels to define a point at which the front end portion of the optical fiber is to be positioned when the optical fiber is assembled by a pick-and-push method.

An optical device array integrated circuit (IC) may be embedded in the optical device module such that the plurality of optical devices are arranged at a predetermined distance from the respective front end portions of the plurality of optical fiber insertion channels.

The connector plug according to an embodiment of the present invention may further include a plurality of optical lenses arranged on a surface of the optical device module having the plurality of optical devices embedded therein to control a path of light so that light generated from the optical device is focused on the optical component.

In addition, each of the plurality of optical lenses may be a collimating lens for allowing the light generated from the optical device to be travelled in a path close to a parallel direction without being dispersed, or a focusing lens for focusing the light on one point.

The optical component may be an optical path conversion member arranged at an orthogonal point between the optical device of the light engine and the optical fiber to reflect or refract the optical signal to transfer the optical signal between the optical fiber and the light engine, thereby converting the path of the optical signal by 90°.

The optical device module may comprise: a light engine encapsulated by a mold body; an external connection terminal electrically connected to the outside; and a wiring layer for interconnecting the external connection terminal and the light engine.

The external connection terminal may be formed on a first surface of the mold body, and the wiring layer may be formed on a second surface of the mold body and may include a conductive vertical via formed through the mold body to interconnect the external connection terminal and the wiring layer.

A connector plug according to another embodiment of the present invention includes: an optical device module having a light engine that generates an optical signal or receives an optical signal; and an optical fiber alignment guide member formed on one surface of the optical device module to form an optical fiber insertion channel having at least one optical fiber seated thereon.

The connector plug according to another embodiment of the present invention may further include an optical path conversion member arranged at an orthogonal point where a first direction of the optical signal and a second direction of the optical fiber insertion channel cross each other to reflect or refract an optical signal to transmit an optical signal between the light engine and the optical fiber, thereby converting an optical signal path by 90°.

The optical path conversion member may be a reflective mirror or a prism.

A connector plug according to another embodiment of the present invention may comprise: an optical device module comprising a light engine for generating or receiving an optical signal by an optical device encapsulated therein; first and second block guides formed on one side of the optical device module and defining first and second mounting regions along the longitudinal direction; an optical fiber fixing block installed in the first mounting region and having an optical fiber insertion channel to which at least one optical fiber is seated on the upper surface; an optical component that deliver the optical signal between the optical fiber and the light engine; and an optical component alignment guide installed in the second mounting region and supporting one end of the optical component.

A connector plug according to another embodiment of the present invention may further comprise a pair of partitioned partitions protruding toward the inner side of the first and second block guides to define the first and second mounting regions; and at least one optical lens formed at intervals in correspondence to at least one optical fiber seated on the optical fiber insertion channel inside the pair of partition protrusions.

An active optical cable (AOC) assembly according to another embodiment of the present invention comprises: a connector plug having an optical fiber insertion channel; and an optical cable to which an optical fiber is coupled to the optical fiber insertion channel, wherein the connector plug is a connector plug according to any one of claims 1 to 19.

A method of manufacturing a connector plug according to an embodiment of the present invention comprises the steps of: preparing an optical device module having a light engine for generating or receiving an optical signal by an optical device encapsulated therein; forming, on one surface of the optical device module, an optical fiber alignment guide member forming an optical fiber insertion channel on which at least one optical fiber is seated so as to automatically align and position the optical device of the light engine and the optical fiber and an optical component alignment guide arranged at a predetermined distance from the optical fiber alignment guide member and for aligning the optical component; assembling the optical fiber to the optical fiber insertion channel; and assembling the optical component to align the optical device of the light engine and the optical fiber between the optical component alignment guide member and the optical fiber.

### ADVANTAGEOUS EFFECTS

In general, an active optical cable (AOC) connector enabling high-speed transmission of several tens giga to 100G or more requires a compact and slim optical interface connector having a thickness of 1 mm. In order to satisfy reasonable manufacturing costs, misalignment is not generated while using passive alignment among a PCB, an optical device (PD/VCSEL), an optical component (lens or mirror), and an optical fiber.

The misalignment occurs mainly between a PCB and an optical device, an optical device and a mirror, an optical device and a lens, and a mirror and an optical fiber.

The present invention has a simple structure in which an assembly of an optical device module, an optical fiber, and an optical component can be combined with a minimum number of components and an assembly process.

In addition, in the present invention, optical fibers and optical components can be assembled by using an optical fiber alignment guide member and an optical component alignment guide formed on one surface of the optical device module having the optical device embedded therein, so that the alignment between the optical device and the optical component and the alignment between the optical component and the optical fiber can have high accuracy without misalignment even though separate optical components (reflective mirrors or prisms) are used.

Also, in the embodiment of the present invention, after assembling the optical fiber fixing block and the optical component alignment guide in the first and second mounting regions defined by the first and second block guides, the optical fiber is assembled to the optical fiber fixing block, and the optical component alignment guide and the optical fiber are used to slantly assemble the optical component, or the optical component alignment guide is used as an optical component to simply install a right angle prism.

Further, in the present invention, an optical device and a driving chip are packaged without using a substrate in a Fan Out Wafer Level Package (FOWLP) manner using a semiconductor manufacturing process, so that an optical device module can be realized in ultra-compact size of 1/16 or so of the conventional art.

In addition, in the present invention, an optical fiber assembly channel having an open structure is integrally formed in an optical device module in the form of a system-in-package (SiP) type, so that the light engine can be packaged into a single chip or a single device.

In the present invention, since an optical device is mounted on an optical device module in the form of a flip chip, packaging can be performed without wire-bonding, thereby reducing a signal resistance coefficient and an electrical resistance coefficient and improving high-frequency characteristics. As a result, performance degradation caused by wire bonding of an optical device (PD/VCSEL) with high-speed interconnection of several tens giga to 100 giga or more can be solved.

In the present invention, an optical fiber assembly channel of a pick-and-place type package may have a structure capable of automating an optical fiber assembly.

In addition, the present invention can provide an active optical cable (AOC) assembly (such as an optical interface connector) capable of transmitting and receiving a large amount of data at a very high speed and being slimmed with a thickness of 1 mm.

In the present invention, a physically detachable coupling can be provided to a mating port of a terminal, and electrical I/O interfacing or optical interfacing can be performed through an interface provided at the mating port.

In addition, in the present invention, an external connection terminal made of a solder ball is provided and ultra-high-speed and high-capacity data transfer can be performed between a PCB and another PCB, between a chip and another chip, between a PCB and a chip, and between a PB and a peripheral device.

A connector plug according to the present invention can be packaged in a form of a system-in-package (SiP), a system-on-chip (SoC), a system-on-board (SoB), and a package-on-package (PoP), as a transponder chip having both an electro-optic conversion function and a photo-electric conversion function.

In addition, in the present invention, an active optical cable (AOC) can implement an external connection terminal to meet the data transmission standard such as a mini display port, a standard display port, a mini universal serial bus (USB), a standard USB, a PCI Express (PCIe), IEEE 1394 Firewire, Thunderbolt, lightning, and high-definition multimedia interface (HDMI).

As a result, the HDMI type active optical cable (AOC) according to the present invention can be applied for digital signal encryption transmission between a video reproduction device (such as a set-top box) and a video display device (such as TV) requiring high-bandwidth high-speed data transmission by simultaneously enabling transmission of control signals capable of applying a video and audio copy protection (recording prevention) technology to one cable.

### BRIEF DESCRIPTION OF THE DRAWINGS

FIG. 1 is a schematic block diagram illustrating an optical communication system constructed using an active optical cable (AOC) assembly according to the present invention.
FIG. 2 is a plan view illustrating a connector plug in which an optical fiber alignment guide member and an optical component alignment guide are integrally formed on one surface of an optical device module according to a first embodiment of the present invention.
FIG. 3 is a longitudinal cross-sectional view of an active optical cable (AOC) assembly in which optical fibers and optical components are assembled using an optical fiber alignment guide member and an optical component alignment guide formed in the optical device module of FIG. 2.
FIG. 4 is an enlarged view of the optical component coupling portion in FIG. 3.
FIG. 5 is an enlarged front view showing a structure in which optical fibers are assembled in the optical fiber alignment guide member in FIG. 3.
FIG. 6 is a perspective view illustrating a connector plug in which an optical fiber alignment guide member is integrally formed on one surface of an optical device module according to a second embodiment of the present invention.
FIG. 7 is a perspective view of an active optical cable (AOC) assembly in which optical fibers and optical components are assembled using the optical connector plug of FIG. 6 according to a second embodiment of the present invention.
FIGS. 8A and 8B are front views of an active optical cable (AOC) assembly in which optical fibers are assembled using a modified optical fiber alignment guide member according to third and fourth embodiments, respectively.
FIGS. 9A and 9B are a side view and a cross-sectional view taken along a A-A' line of an active optical cable (AOC) assembly, respectively, in which optical fibers are assembled using a modified optical fiber alignment guide member according to a fifth embodiment.
FIGS. 10A to 10C are a side view, and cross-sectional views taken along lines B-B' and C-C' of an active optical cable (AOC) assembly, respectively, in which optical fibers are assembled using a modified optical fiber alignment guide member according to a sixth embodiment.
FIGS. 11A to 11C are a side view, and cross-sectional views taken along lines D-D' and E-E' of an active optical cable (AOC) assembly, respectively, in which optical fibers are assembled using a modified optical fiber alignment guide member according to a seventh embodiment.
FIGS. 12A to 12G are cross-sectional views illustrating a method of fabricating an optical device module for use in the active optical cable (AOC) assembly according to the present invention by a Fan Out Wafer Level Package (FOWLP) manner.
FIGS. 13A to 13C are cross-sectional views showing an exit structure of an optical device (such as a light emitting device) arranged in an optical device module, respectively.
FIGS. 14A and 14B are a plan view and a cross-sectional view, respectively, showing an embodiment in which an active optical cable (AOC) assembly of the present invention is on-board- interconnected to a board.
FIG. 15 is a longitudinal cross-sectional view of an active optical cable (AOC) assembly in which optical fibers and optical components are assembled using an optical fiber alignment guide member and an optical component alignment guide formed in the optical device module of FIG. 2, according to an eighth embodiment of the present invention.

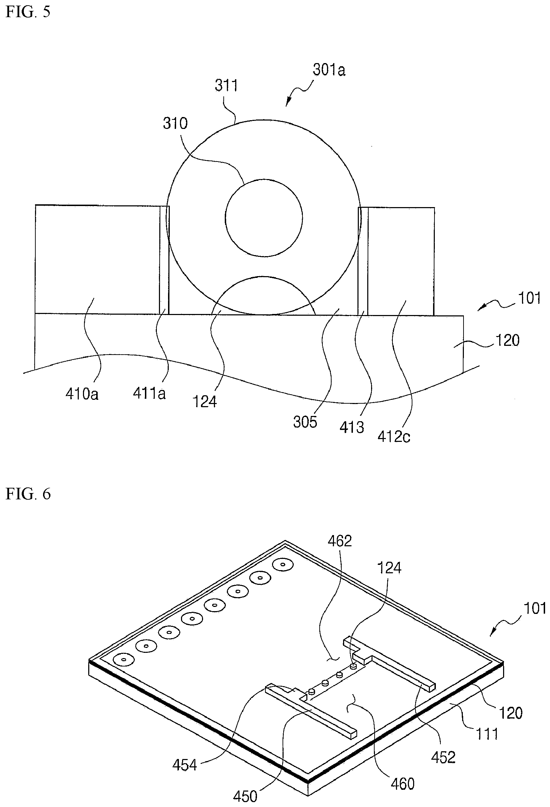

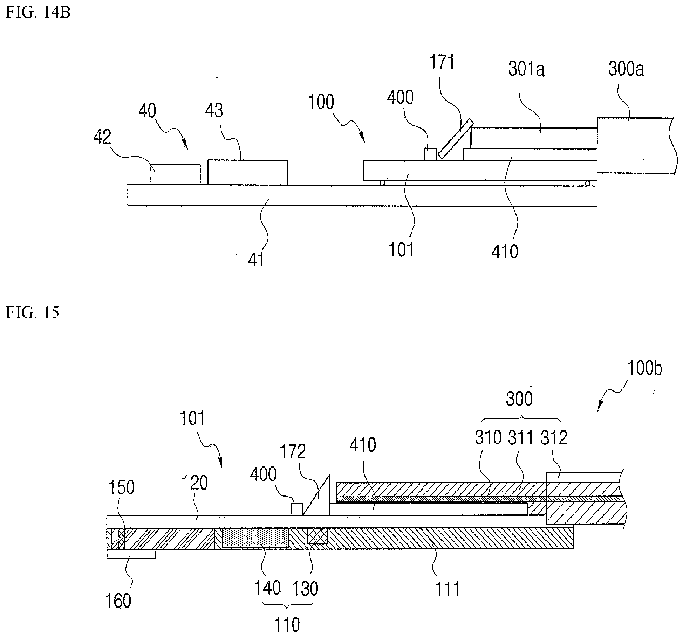

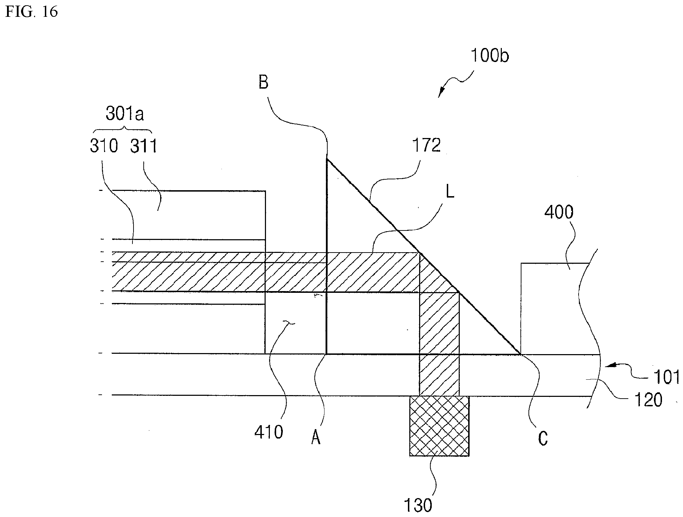

FIG. 6 is a partial enlarged view of essential parts of FIG. 15.

### BEST MODE

Hereinafter, embodiments of the present invention will be described in detail with reference to the accompanying drawings. The sizes and shapes of the components shown in the drawings may be exaggerated for clarity and convenience.

Due to the price of the elements that convert electrical signals to optical signals and vice versa, optical communication systems are typically used as backbones in networks. However, optical communication systems can provide various advantages in computer communications. Computer communications refers to communications ranging from a few centimeters to hundreds of centimeters.

The present invention provides systems applicable to computer communications as well as an optical communication system used for optical communication between a terminal and another terminal which are located at a long distance from each other.

The optical system may use a semiconductor package that connects an optical fiber to a light engine. An optoelectronic element is a light emitting device or a light receiving device. An example of a light emitting device is a vertically-cavity surface-emitting laser (VCSEL). An example of a light receiving device is a photodiode (PD).

A driving circuit (i.e., a driving chip or optical IC) is used to operate according to an optical device. For example, a photodiode operates with a trans-impedance amplifier to amplify an electrical signal due to a collision of photons on the photodiode. When the optoelectronic element is a light emitting device, the drive circuit is used to drive the light emitting device.

An optical device module package is provided in which an optical device and a driving circuit are placed in a package of a system-in-package (SiP) type without using a substrate, and an optical path between the optical device and the outside of the SiP is formed. The elimination of substrate usage enables smaller and cheaper optical transmission systems.

In the present invention, a slim optical device module can be implemented by packaging an optical device and a driving chip by using a fan-out technology of withdrawing input/output (I/O) terminals thereby increasing I/O terminals, that is, a fan-out Wafer Level Package (FOWLP) technology, when a driving circuit (such as a driving chip) operating according to an optoelectronic element is integrated without wire-bonding using a flip chip package technology together with the optoelectronic element, while elements are integrated without using a substrate.

The optical device module is a kind of SiP technology, and it is compared with the conventional package by packaging using an encapsulation material such as epoxy mold compound (EMC) for fixing a chip (such as a die) without using a substrate such as a PCB, so that it can be downsized and slimmed to a level of about 1/16, and the cost can be reduced.

In addition, various alignment techniques are used to align optical fibers to be assembled in a semiconductor package (optical device module) having optoelectronic elements (such as optical devices) embedded therein. After performing a manufacturing process of an optical device module by using a semiconductor process on a wafer unit, an optical fiber alignment guide member and an optical component alignment guide for seating the optical fiber and the optical component are integrally formed on one surface of the optical device module, and an optical connector plug capable of fixing the optical fiber and the optical component by a dicing process individually separating the optical fiber and the optical component is obtained in a semiconductor package type.

Moreover, an optical device alignment guide member and an optical component alignment guide required for assembling the optical device and the optical component are integrally formed on the optical device module wafer, and the alignment between the optical device and the optical component by assembling the optical device and the optical component, and the alignment between the optical component and the optical fiber can be achieved without misalignment even if the alignments use an inexpensive passive alignment technique without using active alignment.

In the following detailed description, the light engine can refer to an optical device provided therein, and the optical fiber can refer to an optical fiber line in which a coating layer is removed from an optical fiber.

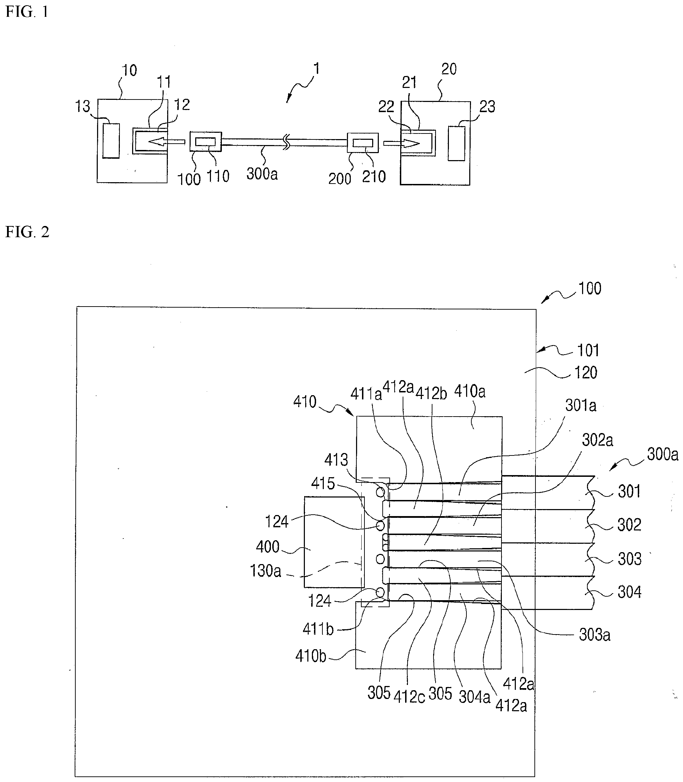

FIG. 1 is a schematic block diagram illustrating an optical communication system constructed using an active optical cable (AOC) assembly according to the present invention.

The optical communication system 1 enables optical communication by interconnecting first and second terminals 10 and 20 to have first and second connector plugs 100 and 200 at respective ends. An optical cable 300a having optical fibers embedded therein is connected between the first and second connector plugs 100 and 200.

Here, the first and second terminals 10 and 20 may each be one of a desktop or laptop computer, a notebook, an Ultrabook, a tablet, a netbook, or a number of computing devices not included therein.

In addition to computing devices, the first and second terminals 10 and 20 may include many other types of electronic devices. Other types of electronic devices may include, for example, smartphones, media devices, personal digital assistants (PDAs), ultra mobile personal computers, multimedia devices, memory devices, cameras, voice recorders, I/O devices, a server, a set-top box, a printer, a scanner, a monitor, an entertainment control unit, a portable music player, a digital video recorder, a networking device, a game machine, and a gaming console.

The first and second terminals 10 and 20 are connected to each other through the optical communication system according to the present invention and first and second mating ports 12 and 22 which are physically coupled to the first and second connector plugs 100 and 200 so as to be capable of performing interfacing are installed, in numbers of at least one, in housings 11 and 21 which are provided in the first and second terminals 10 and 20, respectively.

The first and second connector plugs 100 and 200 may support communications via an optical interface. In addition, the first and second connector plugs 100 and 200 may support communications via an electrical interface.

In some exemplary embodiments, the first terminal 10 may include a first server having a plurality of processors, and the second terminal 20 may include a second server having a plurality of processors.

In these embodiments, the first server may be interconnected with the second server by means of the connector plug 100 and the mating port 12. In another embodiment, the first terminal 10 may include a set-top box, the second terminal 20 may include a television (TV), and vice versa. Also, the first and second connector plugs 100 and 200 and the first and second mating ports 12 and 22 described herein may be one of a number of embodiments.

Also, the second terminal 20 may be a peripheral I/O device.

The first and second connector plugs 100 and 200 may be configured to engage with the first and second mating ports 12 and 22 of the first and second terminals 10 and 20, respectively.

The first and second mating ports 12 and 22 may also have one or more optical interface components. In this case, the first mating port 12 may be coupled to an I/O device and may include processing and/or terminal components for transferring optical signals (or optical and electrical signals) between a processor 13 and the port 12. The signal transfer may include generation and conversion to or reception of optical signals and conversion to electrical signals.

The processors 13 and 23 provided in the first and second terminals 10 and 20 may process electrical and/or optical I/O signals, and one or more of the processors 13 and 23 may be used. The processors 13 and 23 may be a microprocessor, a programmable logic device or array, a microcontroller, a signal processor, or a combination comprising some or all of these.

The first and second connector plugs 100 and 200 may include first and second light engines 110 and 210 in the connector plugs and the first and second connector plugs 100 and 200 may be referred to as active optical connectors or active optical receptacles and active optical plugs.

Generally, such an active optical connector can be configured to provide a physical connection interface to the mating connector and optical assembly. The optical assembly may also be referred to as a "sub-assembly." The assembly may refer to a finished product or a completed system or subsystem of an article of manufacture, but the sub-assembly may generally be combined with other components or other subassemblies to complete the sub-assembly. However, subassemblies are not distinguished from "assemblies," herein, and references to assemblies can be referred to as subassemblies.

The first and second light engines 110 and 210 may include any devices configured to generate and/or receive and process an optical signal according to various tasks.

In an embodiment, the first and second light engines 110 and 210 may include at least one of a laser diode for generating an optical signal, a light integrated circuit (IC) for controlling the optical interfacing of the first and second connector plugs 100 and 200, and a photodiode for receiving an optical signal. In some embodiments, the optical IC may be configured to control the laser diode and the photodiode, drive the laser diode, and/or amplify the optical signal from the photodiode. In another embodiment, the laser diode comprises a vertical-cavity surface-emitting laser diode (VCSEL).

In one embodiment, the first and second light engines 110 and 210 may be configured to process optical signals according to one or more communication protocols or in correspondence thereto. In embodiments where the first and second connector plugs 100 and 200 are configured to transmit optical and electrical signals, optical and electrical interfaces may be required to operate in accordance with the same protocol.

Depending on whether the first and second light engines 110 and 210 process signals in accordance with the protocol of the electrical I/O interface, or process signals in accordance with another protocol or standard, the first and second light engines 110 and 210 may be configured or programmed for the intended protocol in a particular connector, or various light engines may be configured for the various protocols.

In one embodiment, a photodiode, or a component having a photodiode circuit, can be considered as a photonic terminal component because the photodiode converts an optical signal into an electrical signal. The laser diode may be configured to convert an electrical signal to an optical signal. The optical IC may be configured to drive the laser diode based on a signal to be optically transmitted by driving the laser diode to an appropriate voltage to generate an output for generating the optical signal. The optical IC may be configured to amplify the signal from the photodiode. The optical IC may be configured to receive, interpret, and process an electrical signal generated by the photodiode.

In an embodiment of the present invention, an I/O complex (not shown) may be provided to transmit an optical signal (or an optical signal and an electrical signal) between processors 13 and 23 and mating ports 12 and 22. The I/O complex can accommodate at least one I/O wiring which is constructed to control at least one I/O link which allows the processor 13 and 23 to communicate with the first and second terminals 10 and 20 via the first and second light engines 110 and 210 of the first and second connector plugs 100 and 200. The I/O wiring may be configured to provide the ability to transmit one or more types of data packets of a communication protocol.

Various communication protocols or standards may be used in embodiments of the present invention. The communications protocols meet the data transmission standard such as a mini display port, a standard display port, a mini universal serial bus (USB), a standard USB, a PCI Express (PCIe), an IEEE 1394 Firewire, a Thunderbolt, a lightning, and a High Definition Multimedia Interface (HDMI), but the present invention is not limited thereto.

Each different standard may have a different configuration or pinout for an electrical contact assembly. In addition, the size, shape and configuration of the connector may be subject to a standard that includes tolerances for mating of the mating connectors. Thus, the layout of connectors for integrating optical I/O assemblies may differ in various standards.

Physically detachable coupling may be made between the first and second connector plugs 100 and 200 and the mating ports 12 and 22 of the first and second terminals 10 and 20, and electrical I/O interfacing or optical interfacing may be accomplished via an interface provided at the mating ports 12 and 22.

In addition, in another embodiment described later, the first and second connector plugs 100 and 200 are not physically detachably coupled with the mating ports 12 and 22, but an external connection terminal made of a solder ball may be fixedly coupled to the main board including the processors 13 and 23. As a result, as shown in FIG. 1, the active optical cable (AOC) assembly of the present invention, in which the first and second connector plugs 100 and 200 are connected to both ends of the optical cable 300a, can be applied when the high-speed and large-capacity data transmission is needed by interconnecting each other, for example, between a PCB and another PCB, between a chip and another chip, between a chip and a PCB, between a board and a peripheral device, or between a terminal body and a peripheral I/O device.

In the optical communication system 1 according to an embodiment of the present invention, when the optical communication is performed between the first and second terminals 10 and 20, the first and second connector plugs 100 and 200 provided at respective ends can be configured in the same manner. Accordingly, the first connector plug 100, that is, the active optical cable (AOC) assembly, to be coupled with the first terminal 100 will be described in detail below.

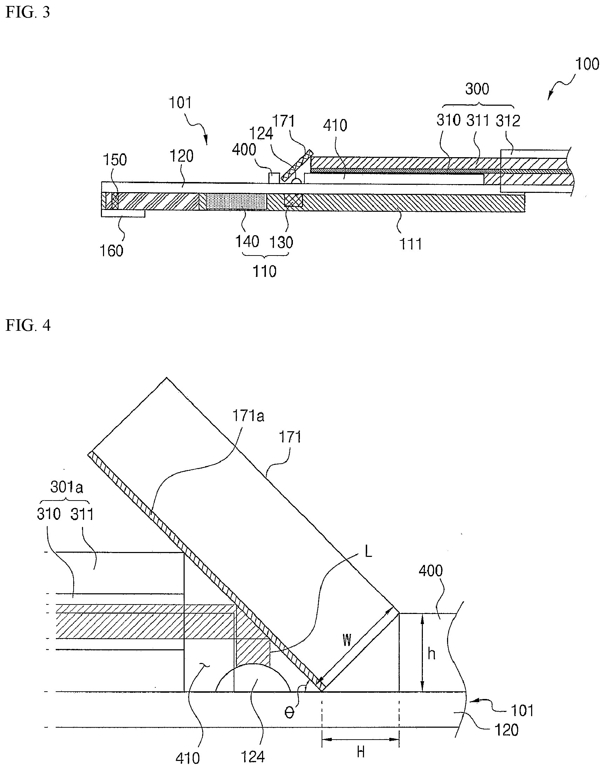

FIG. 2 is a plan view illustrating a connector plug in which an optical fiber alignment guide member and an optical component alignment guide are integrally formed on one surface of an optical device module according to a first embodiment of the present invention. FIG. 3 is a longitudinal cross-sectional view of an active optical cable (AOC) assembly in which optical fibers and optical components are assembled using an optical fiber alignment guide member and an optical component alignment guide formed in the optical device module of FIG. 2. FIG. 4 is an enlarged view of the optical component coupling portion in FIG. 3. FIG. 5 is an enlarged front view showing a structure in which optical fibers are assembled in the optical fiber alignment guide member in FIG. 3.

Referring to FIGS. 2 to 5, the active optical cable (AOC) assembly according to the first embodiment of the present invention includes a connector plug 100 and an optical cable 300a coupled thereto.

The connector plug 100 according to the first embodiment of the present invention generally includes: an optical device module 101 manufactured in a system-in-package (SiP) form to include a light engine 110; an optical fiber alignment guide member 410 integrally formed on one surface of the optical device module 101 to automatically align and position an optical device 130 of the light engine 110 and a plurality of optical fibers 301 to 304 to form an optical fiber insertion channel 305 having an open structure on which the plurality of optical fibers 301 to 304 are seated; an optical component 171 for transmitting an optical signal between the optical fibers 301 to 304 and the light engine 110; and an optical component alignment guide 400 arranged at a predetermined distance from the optical fiber alignment guide member 410 to align the optical component 171.

The active optical cable (AOC) assembly according to the first embodiment will be described, for example, in the case where the optical cable 300a composed of four channels, that is, four optical fibers 301 to 304, is connected to the connector plug 100.

First, the optical device module 101 serving as a base plate of the connector plug 100 is manufactured in a system-in-package (SiP) form so as to include a light engine 110 therein, as described below.

As shown in FIG. 3, the optical device module 101 may include an active light engine 110 configured to actively generate and/or receive and process optical signals. The light engine 110 may include an optical device 130 for generating an optical signal or receiving an optical signal, and an optical IC 140 for controlling an optical interface by controlling the optical device.

In addition, in the optical device module 101, a conductive vertical via 150 that is used for electrical interconnection with the external connection terminal 160 arranged on an outer surface of the optical device module 101, is arranged in the vertical direction with respect to the mold body 111.

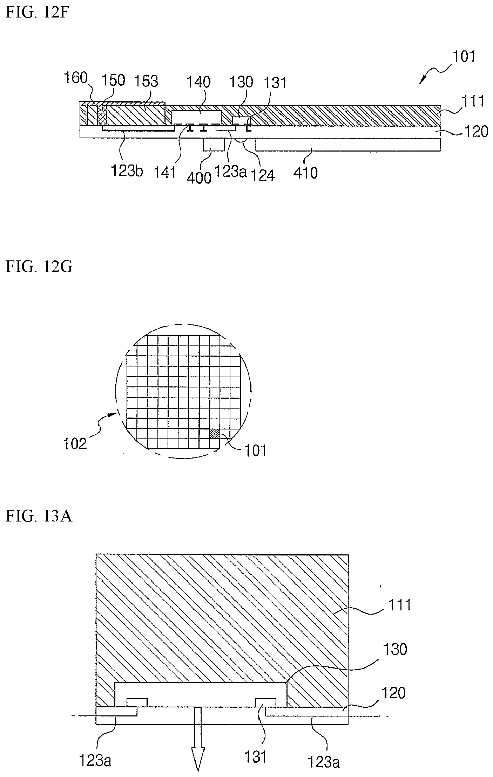

In addition, as shown in FIG. 12F, the optical device module 101 includes a wiring layer 120 formed on a lower surface thereof, the wiring layer 120 for protecting connection pads 131 and 141 of various components constituting the light engine 110, for example, the optical device 130 and the optical IC assembly 140 and electrically connecting the optical device 130 and the optical IC assembly 140 with the connection pads 131 and 141, respectively.

An optical fiber insertion channel 305 is formed on one surface of the optical device module 101 in which four optical fiber lines 301a to 304a each having a clad 311 formed on the outer circumference of a core 310 are inserted and assembled into the optical fiber insertion channel 305 by removing the coating layer from the four optical fibers 301 to 304 constituting the optical cable 300a.

In the first embodiment of the present invention, the optical fiber alignment guide member 410 and the optical component alignment guide 400 are integrally formed on one surface (i.e., the surface of the wiring layer 120) of the optical device module 101.

First, the optical fiber alignment guide member 410 has a pair of first and second optical fiber alignment guides 410a and 410b protruding at intervals from both sides to form four optical fiber insertion channels 305 into which a plurality of, for example, four optical fiber lines 301a to 304a can be inserted and assembled, and three, that is, third to fifth optical fiber alignment guides 412a to 412c protruding inside the first and second optical fiber alignment guides 410a and 410b.

The first to fifth optical fiber alignment guides 410a, 410b, and 412a to 412c are arranged at the same interval to form an optical fiber insertion channel 305 having the same width and are formed in a rectangular bar shape, and the first and second optical fiber alignment guides 410a and 410b arranged outside may have a relatively large area.

In this case, the optical fiber insertion channel 305 between the first to fifth optical fiber alignment guides 410a, 410b, and 412c to 412c has a width corresponding to the outer diameter of the optical fiber lines 301a to 304a in which the right-hand entrance of the optical fiber insertion channel 305 in the drawing is wider in comparison with the inner side of the optical fiber insertion channel 305 and gets gradually narrower as it goes to the inside..

To this end, the third to fifth optical fiber alignment guides 412a to 412c have tapered portions 412a formed on both sides of the entrance such that the width of the entrance thereof is narrow and the width of the inside is widened by a predetermined length as it goes to the inside.

In addition, the tapered portion 412a is also formed on the inner surface of the first and second optical fiber alignment guides 410a and 410b so that the width of the optical fiber insertion channel 305 gradually decreases from the entrance thereof.

As the taper portion 412a is formed in the first to fifth optical fiber alignment guides 410a, 410b, and 412a to 412c, the optical fiber lines 301a to 304a can be easily inserted into the optical fiber insertion channel 305 in a pushing-in and assembling method_by picking the plurality of optical fiber lines 301a to 304a one by one using pick-and-push equipment.

In addition, when the optical fiber lines 301a to 304a are inserted into and assembled with the optical fiber insertion channel 305, the stopper protrusions 413 and 415 serving as a stopper for aligning a point at which the tip ends of the optical fiber lines 301a to 304a are positioned are formed at both sides of the inner ends of the third to fifth optical fiber alignment guides 412a to 412c. Stopper protrusions 411a and 411b facing the stopper protrusions 413 and 415 are arranged on the inner ends of the first and second optical fiber alignment guides 410a and 410b.

An optical device array IC 130a is embedded in a mold body 111 of the optical device module 101 such that four optical devices 130 are arranged under the four optical fiber insertion channels 305 formed by the first to fifth optical fiber alignment guides 410a, 410b, and 412a to 412c at a predetermined distance from the four optical fiber insertion channels 305.

In addition, an optical lens 124 for changing (or controlling) the path of the light L generated from the optical device 130 may be formed on the surface of the optical device module 101 under which the four optical devices 130 are embedded.

For example, the optical lens 124 functions as a collimating lens which makes the light L generated from the optical device 130 in a path in near parallel without being dispersed, or a focusing lens that focuses the light L at one point. Thus, the light L may be guided to be incident to the optical component 171 (or a lens).

In this case, the optical lens 124 may be made of a hemisphere having a diameter of 25 µm, for example.

The optical component alignment guide 400 is arranged at a predetermined distance from the first to fifth optical fiber alignment guides 410a, 410b, and 412a to 412c, and is installed to align the optical component 171 at a predetermined angle, for example, 45°, at a predetermined position.

The optical fibers 301 to 304 and the optical device 130 of the light engine 110 are arranged in an orthogonal relationship. Therefore, in order to transmit an optical signal between the optical fiber lines 301a to 304a or the optical fibers 301 to 304 and the optical device 130, it is required that the optical component 171 should be slantly arranged at 45° on the surface of the optical device module 101.

That is, the optical component 171 is arranged at an orthogonal point between the optical device 130 of the light engine 110 and the optical fiber lines 301a to 304a of the optical fibers 301 to 304, and reflects or refracts the optical signal to transmit the optical signal between the optical fibers 301 to 304 and the light engine 110, and serves as an optical path conversion member for converting the optical signal path by 90°. The optical component 171 changes the path of light according to the shape of the optical component 171, or can adjust the distance of the optical path according to the installation inclination angle (θ) with respect to the surface of the optical device module 101 of the optical component 171.

The optical component 171 may be, for example, a concave mirror in which a 45° reflection mirror or a reflective surface is formed in a concave shape. The concave mirror plays a role of changing a path to collect incident light L generated from the optical device 130 and to enter the core 310 of the optical fiber line 300a.

In a preferred embodiment, the optical component 171 can be configured to focus the light received from the optical fiber 300 onto the optical device 130 (e.g., the photodiode) of the light engine 110, and to focus the light L from the optical device 130 (e.g., the laser diode) of the light engine 110 to the core 310 of the optical fiber 300.

The optical component 171 may be a reflective mirror having a specular reflection of incident light by depositing, on a planar silicon substrate or a resin substrate, a metal layer 171a made of metal such as Au, Ag, Al, Mg, Cu, Pt, Pt, Pd, Ni, Cr, etc. to a thickness of 100 nm to 200 nm.

It has been described in the first embodiment that the optical component 171 includes a reflective mirror obliquely installed on the surface of the optical device module 101. However, if an optical component is arranged at an orthogonal point between the optical device 130 of the light engine 110 and the optical fiber lines 301a to 304a of the optical fibers 301 to 304, and reflects or refracts the optical signal to transmit the optical signal between the optical fibers 301 to 304 and the light engine 110, and serves as an optical path conversion member for converting the optical signal path by 90°, such an optical component can be employed instead of the reflective mirror.

The optical component is also possibly employed as a configuration of, for example, assembling a mirror injection material or the like having a reflective surface at the same position as the reflective surface of the reflective mirror to the surface of the optical device module 101.

The optical component alignment guide 400 may include a rectangular protrusion having the same height "h" as the first through fifth optical fiber alignment guides 410a, 410b, and 412a to 412c, for example, 70 µm.

In this case, if the thickness W of the optical component 171 is set to a proper thickness, as shown in FIG. 4, one edge of the cross section of the optical component 171 is set to contact the surface of the optical device module 101 and the other edge is set to be aligned with the upper edge of the optical component alignment guide 400.

At this time, when one edge of the cross section of the optical component 171 is located at a point spaced apart from the front end of the optical component alignment guide 400 by a distance H equal to the height "h" of the optical component alignment guide 400, the inclination angle (θ) with respect to the surface of the optical device module 101 of the optical component 171 is inclined obliquely at 45°.

In a state that the optical component 171 is temporarily assembled such that one end of the optical component 171 is supported on the surface of the optical component alignment guide 400 and the surface of the optical component module 101, and the other end or the side surface thereof contacts the optical fiber lines 301a to 304a or the tip of the optical fibers 301 to 304, an adhesive of an epoxy or a polyimide group is applied to the interconnect point and can be fixed by a method of curing the adhesive by irradiating heat, ultraviolet (UV) ray or the like.

In the present invention, the positions of the first to fifth optical fiber alignment guides 410a, 410b, and 412a to 410c are set such that the optical fiber lines 301a to 304a or the optical fibers 301 to 304, the optical device 130, and the optical lens 124 are arranged in a straight line.

In the first embodiment of the present invention, the optical fibers 301 to 304 are assembled to the optical fiber insertion channel 305 integrally formed on one surface of the optical device module 101, and the optical component 171 is assembled between the optical component alignment guide 400 and the optical fibers 301 to 304. Accordingly, the alignment between the optical device and the optical component by assembling the optical device 130 and the optical component 171, and the alignment between the optical component 171 and the optical fibers 301 to 304 can have high accuracy with no misalignment even in the case of using an individual optical component 171 even if the alignments use an inexpensive passive alignment technique without using active alignment.

The optical device module 101 may include a light engine 110 (see FIG. 1) to provide an optical interface, and an external connection terminal 160, which satisfies one of various data transmission standard standards, may be formed in the form of a conductive strip on an outer side surface of the optical device module 101.

In the present invention, the external connection terminal 160 may be implemented to satisfy the data transmission standard specification of a high definition multimedia interface (HDMI), and the conductive strip form of the external connection terminal 160 may be variously modified according to the data transmission standard, and may be formed in the form of a solder ball or a metal bump.

The optical device module 101 may include an active light engine 110 configured to actively generate and/or receive and process optical signals. The light engine 110 may include an optical device 130 for generating an optical signal or receiving an optical signal, and an optical IC 140 for controlling an optical interface by controlling the optical device. In addition, the optical device module 101 may further include a processor (not shown), an encoder and/or a decoder, a passive device such as R, L, and C, or a power related IC chip, which are required for signal processing in addition to the optical IC 140 as necessary.

The optical device 130 may include, for example, a laser diode for generating an optical signal and/or a photodiode for receiving an optical signal. In another embodiment, the optical IC 140 may be configured to control the laser diode and the photodiode. In another embodiment, the optical IC 140 may be configured to drive the laser diode and amplify an optical signal from the photodiode. In another embodiment, the laser diode may include a VCSEL.

The optical device module 101 does not use a substrate, but integrates various components, for example, the optical device 130 and the optical IC 140 in the form of a flip chip, for example, and is molded by using an epoxy mold compound (EMC) to form the mold body 111. As a result, the mold body 111 serves to safely protect the light engine 110, which is packaged after being integrated, from impact.

As shown in FIG. 12F, in the optical device module 101, a conductive vertical via 150 that is used for electrical interconnection with the external connection terminal 160 disposed on an outer surface of the optical device module 101, is arranged in the vertical direction with respect to the mold body 111.

The optical device module 101 includes the wiring layer 120 for protecting and simultaneously for electrically connecting various components constituting the light engine 110 on the lower surface thereof, for example, the connection pads 131 and 141 of the optical device 130 and the optical IC 140.

In this case, the optical device 130 employs an element in which two connection pads 131 made up of an anode and a cathode are disposed on the same surface as a portion through which light enters and exits.

The wiring layer 120 is provided with a conductive wiring pattern 123a for connecting the optical device 130 and the connection pads 131 and 141 disposed on the lower surface of the optical IC 140, and a conductive wiring pattern 123b interconnecting the optical IC 140 and the conductive vertical via 150 in which the conductive wiring pattern 123a and the conductive wiring pattern 123b are buried in the wiring layer 120. As a result, packaging can be achieved without wire-bonding.

The wiring layer 120 is made of the same material as a dielectric layer or a passivation layer, for example, polyimide, poly (methyl methacrylate) (PMMA), benzocyclobutene (BCB), silicon oxide (SiO₂), acrylic, or other polymer-based insulating materials.

Since the optical device 130 includes a laser diode for generating an optical signal and/or a photodiode for receiving an optical signal, the wiring layer 120 may be made of a transparent material as shown in FIG. 13A such that an optical signal is generated from the laser diode or an optical signal is received by the photodiode.

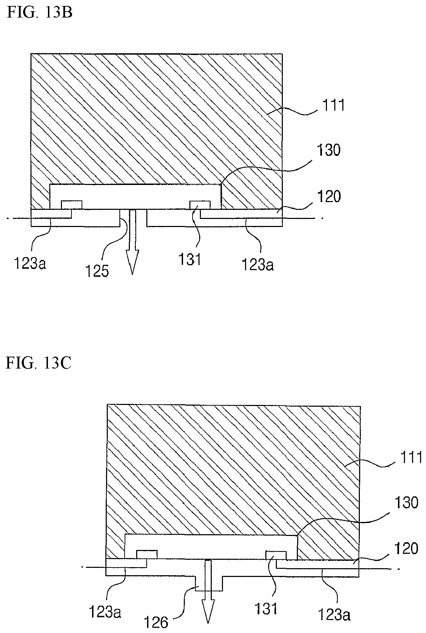

In addition, when the wiring layer 120 is made of an opaque material, a window 125 through which optical signals generated from the optical device 130 can pass is formed as shown in FIG. 13B.

Furthermore, even when the wiring layer 120 is formed of a transparent material as shown in FIG. 13C, the wiring layer 120 may include an extension protrusion 126 to adjust the distance between the embedded optical device 130 and the optical component 171 assembled on the surface of the wiring layer 120.

In addition, as shown in FIGS. 3 and 12F, even when the wiring layer 120 is formed of a transparent material, the wiring layer 120 may further include an optical lens 124 for changing (controlling) the path of the light L generated from the optical device 130.

For example, the optical lens 124 functions as a collimating lens which makes the light L generated from the optical device 130 in a path in near parallel without being dispersed, or a focusing lens that focuses the light L at one point. Thus, the light L may be guided to be incident to the optical component 171 (or a lens).

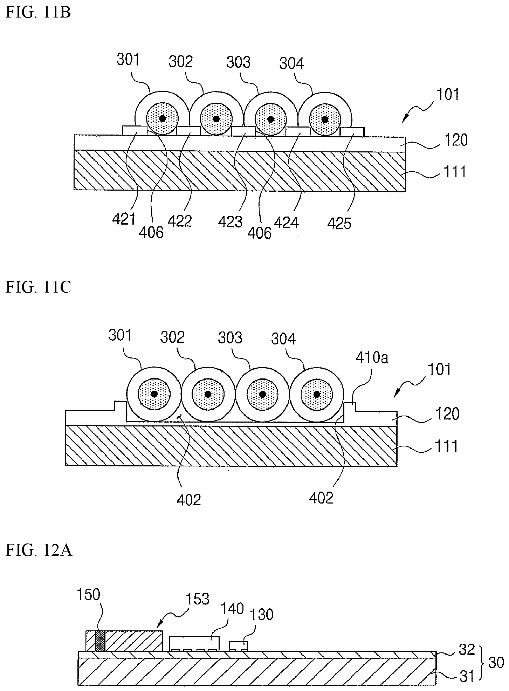

Hereinafter, a method of manufacturing the optical device module 101 according to the present invention will be described with reference to FIGS. 12A to 12F.

First, as shown in FIG. 12A, various chip-shaped components to be integrated into the optical device module 101 are attached to a predetermined position of a molding tape 30 in a flip chip process using the molding tape 30 having an adhesive layer (or a release tape) 32 formed on one surface of a molding frame 31.

In this case, the molding tape 30 may be formed in a wafer shape so that the manufacturing process can be performed in a wafer level, as shown in FIG. 12G.

Various components to be integrated in the optical device module 101 are the optical device 130, the optical IC 140, and a via PCB 153 required to form the conductive vertical via 150, and are mounted in a pick-and-place manner. In this case, a processor necessary for signal processing may be included as needed. The component to be mounted determines the mounting direction so that the connection pads of the chip are in contact with the molding tape 30.

The via PCB 153 may form a through hole by penetrating a PCB with a laser or by using a patterning process and an etching process on the PCB, and fill the through hole with a conductive metal to thereby form the conductive vertical via 150. The conductive metal may be formed of a metal such as gold, silver, or copper, but is not limited thereto and may be a conductive metal. In addition, the method of forming the conductive vertical via 150 in the through hole may include filling the through hole with the conductive metal by sputtering, evaporation, or plating, and then planarizing the surface of a substrate, in addition to the method of filling the conductive metal powder.

In this case, the optical device 130 employs an element in which two connection pads 131 made up of an anode and a cathode are disposed on the same surface as a portion through which light enters and exits.

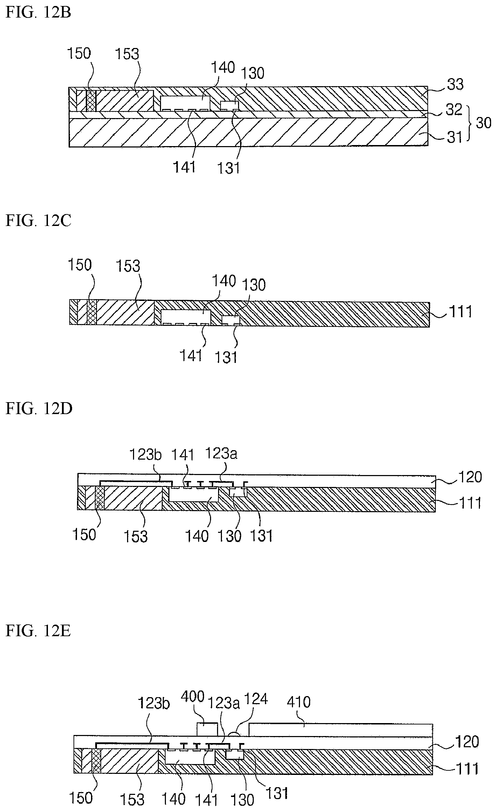

Subsequently, as shown in FIG. 12B, for example, the molding layer 33 is formed on the upper portion of the molding tape 30 with an epoxy mold compound (EMC) and the surface of the molding layer 33 is planarized after curing. Subsequently, the upper surface of the cured mold is processed by chemical mechanical polishing (CMP) to expose the upper ends of the conductive vertical via 150, and then the cured mold and the molding frame 31 are separated, to thus obtain a slim mold body 111, as shown in FIG. 12C.

Subsequently, the wiring layer 120 for inverting the obtained mold body 111, protecting the connection pads 131 and 141 of the exposed optical device 130 and the optical IC 140, and electrically connecting the connection pads 131 and 141 with each other is formed as shown in FIG. 12D.

First, an insulating layer for protecting the exposed optical device 130 and the connection pads 131 and 141 of the optical IC 140 is first formed, and then contact windows for the connection pads 131 and 141 are formed. Subsequently, a conductive metal layer is formed and patterned to form a conductive wiring pattern 123a interconnecting the connection pads 131 and 141 and a conductive wiring pattern 123b interconnecting the optical IC 140 and the conductive vertical via 150.

The wiring patterns 123a and 123b are formed by forming a conductive metal layer by a method such as sputtering or evaporation using a conductive metal such as gold, silver, copper, or aluminum.

Thereafter, an insulating layer covering the conductive wiring patterns 123a and 123b is formed.

The insulation layer is made of polyimide, poly (methyl methacrylate) (PMMA), benzocyclobutene (BCB), silicon oxide (SiO₂), acrylic, or other polymer-based insulating materials.

In this case, since the optical device 130 includes a laser diode for generating an optical signal and/or a photodiode for receiving an optical signal, the insulation layer 120 may be made of a transparent material such that an optical signal is generated from the laser diode or an optical signal is received by the photodiode.

Then, when the wiring layer 120 is formed of a transparent material, as shown in FIG. 12E, a collimating optical lens 124 is formed on the path through which the light generated from the optical device 130 passes, that is, on the surface of the wiring layer 120.

The optical lens 124 may be formed using an etching mask used to form the wiring layer 120, and may be formed into a collimating lens of a hemispherical shape by performing a reflow process after forming a protrusion corresponding to the lens using polyimide.

Another method of forming the optical lens 124 includes forming an insulating layer of the wiring layer 120 with silicon oxide (SiO₂) to form a hemispherical etching mask made of photoresist (PR) and etching the exposed insulating layer using the hemispherical etching mask to thereby form the lens 124.

Meanwhile, in the present invention, as shown in FIG. 12E, while forming the optical lens 124, first to fifth optical fiber alignment guides 410a, 410b, and 412a to 412c and an optical component alignment guide 400 are simultaneously formed or independently formed to align a plurality of optical fiber lines 301a to 304a and/or the optical fibers 301 to 304 and the optical component 171.

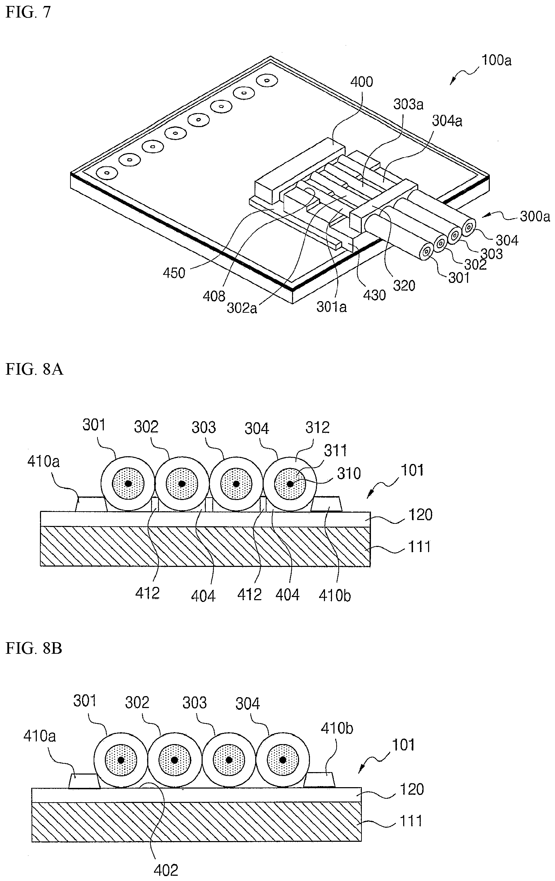

The method and structure of forming the first to fifth optical fiber alignment guides 410a, 410b, and 412c to 412c will be described in detail later with reference to FIGS. 8A through 11C.

Subsequently, as illustrated in FIG. 12F, a conductive metal is deposited on the upper portion of the exposed conductive vertical via 150 to form a metal layer, and then patterned to form a plurality of conductive strips satisfying one of the data transmission standards to thus form an external connection terminal 160.

The external connection terminal 160 may be variously modified according to the data transmission standard, or may be formed in the form of solder balls or metal bumps.

In the above embodiment, a method of integrating the via PCB 153 into the optical device module 101 by a flip chip process in order to form the conductive vertical via 150 is provided, but it is also possible to form a conductive vertical via 150 after manufacturing the mold body 111.

That is, the mold body 111 can be formed by forming a through hole through a laser or a patterning process and an etching process, and filling the through hole with a conductive metal or filing the through hole with a conductive metal by sputtering, evaporation, or plating, and then planarizing the mold surface.

The optical device module 101 according to an embodiment of the present invention may be packaged in a slim form by packaging an optical device and a driving chip without using a substrate in a Fan Out Wafer Level Package (FOWLP) manner using a semiconductor manufacturing process.

As shown in FIG. 12G, the connector plug 100 according to an embodiment of the present invention is made by performing a manufacturing process of forming a system-in-package type optical device module wafer 102 from the optical device module 101 by using a semiconductor process on a wafer-by-wafer basis, and then integrally forming an optical fiber alignment guide member 410 and an optical component alignment guide 400 on one surface of the optical device module 101 to mount the optical fibers 301 to 304 and the optical component 171.

Subsequently, an optical engine package, that is, an optical connector plug is manufactured in a semiconductor package type, in which the optical engine package, that is, the optical connector plug can fix a plurality of optical fiber lines 301a to 304a and/or a plurality of optical fibers 301 to 304 by a dicing process for sawing the optical device module wafer 102 to be individually separated.

On one surface of the optical engine package as described above, a plurality of optical fiber lines 301a to 304a and/or a plurality of optical fibers 301 to 304 are assembled, as shown in FIG. 2.

Thus, in the present invention, the optical fibers 301 to 304 are assembled to the optical fiber insertion channel 305 integrally formed on one surface of the optical device module 101, and the optical component 171 is assembled between the optical component alignment guide 400 and the optical fibers 301 to 304. Accordingly, the alignment between the optical device and the optical component by assembling the optical device 130 and the optical component 171, and the alignment between the optical component 171 and the optical fibers 301 to 304 can have high accuracy with no misalignment even in the case of using an individual optical component 171 even if the alignments use an inexpensive passive alignment technique without using active alignment.

Furthermore, the connector plug 100 of the present invention has a high productivity as the optical fiber alignment guide member and the optical component alignment guide required for assembling the optical fiber and the optical component to the optical component module wafer 102 are integrally formed to the wafer level.

The optical device array IC 130a arranged on the mold body 111 of the optical device module 101 is arranged in a transverse direction in correspondence to the optical fiber lines 301a to 304a and/or the optical fibers 301 to 304 inserted into the optical fiber insertion channel 305.

The optical fiber 300 has a structure in which a clad layer 311 made of a material having a low refractive index in comparison with a core 310 and a coating layer 312 serving as a protective layer are sequentially formed outside the core 310 having a high refractive index. The optical fiber 300 uses the difference in refractive index between the core 310 and the clad 311 to use the phenomenon of propagating while light incident on the core 310 repeats total reflection at the interface between the core 310 and the clad 311.

In this case, the optical fiber is largely divided into a glass optical fiber (GOF) and a plastic optical fiber (POF). The plastic optical fiber (POF) is relatively large in diameter compared to the glass optical fiber (GOF), but it is easy to handle the plastic optical fiber (POF) because of the large cross-sectional area of the core through which light propagates.

In the plastic optical fiber (POF), a core 310 is made of an acrylic resin such as polymethyl methacrylate (PMMA), a polycarbonate resin, polystyrene or the like, for example, and a clad 311 is made of, for example, Fluorinated PMMA (F-PMMA), a fluorine resin or a silicone resin, and a coating layer 312 may be made of, for example, PE. As a plastic optical fiber, for example, an optical fiber composed of a Fluorinated PMMA (F-PMMA) clad in a polymethyl methacrylate (PMMA) core may be used.

When a plurality of optical fibers 301 to 304 are combined to form one optical cable 300a as shown in FIGS. 2, 8B, and 8B to increase the overall bandwidth without using the optical fiber as a single wire, adjacent cladding layers 312 of the plurality of optical fibers 301 to 304 may be fabricated to be bonded together to form a single body.

In the case of the above-mentioned plastic optical fiber (POF), the diameter of each of the optical fibers 301 to 304 is 400 µm which is commercially available according to the development of the technology, and thus it can be applied to the present invention.

In the glass optical fiber (GOF), both the core 310 and the clad 311 are made of silica glass or multicomponent glass having different refractive indices, and the coating layer 312 made of resin is formed on the outer circumference thereof.

The glass optical fiber (GOF) can be implemented in both a single mode and a multi-mode, and the diameters of the core 310 and the clad 311 are 50/125 µm (in the multi-mode) or 10/125 µm (in the single mode), respectively, and has the advantage that can be made in a small diameter compared to the plastic optical fiber (POF).

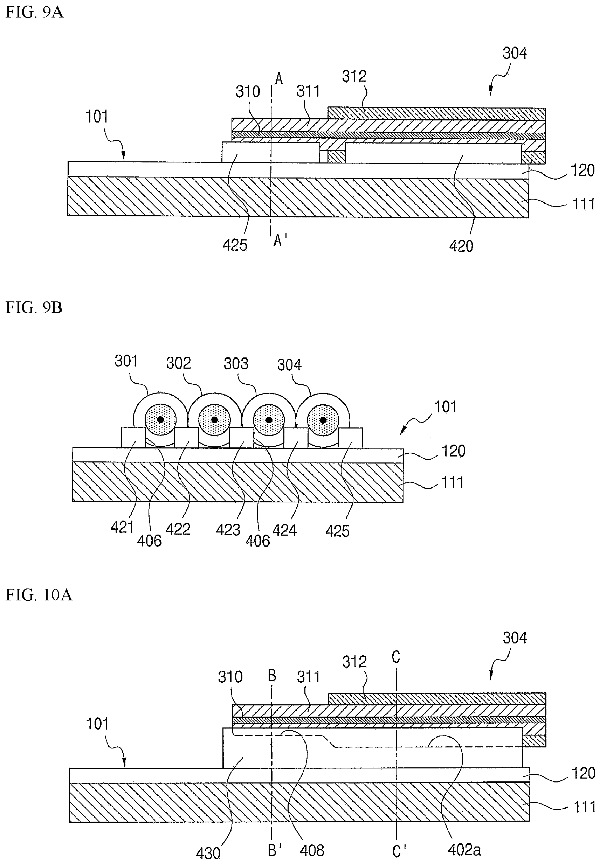

In the case of a glass optical fiber (GOF), a plurality of optical fibers 301a to 304a made of only the core 310 and the clad 311 by peeling the coating layer 312 from the portion inserted into the optical fiber insertion channel 305 of the connector plug 100, may be respectively accommodated in the plurality of optical fiber seating grooves 172d formed in a trench or V-groove shape on the wiring layer 120 of the optical device module 101, as shown in FIG. 9A to 11B.

In addition, in the case of the glass optical fiber (GOF), the coating layers 312 of the plurality of optical fibers 301 to 304 are manufactured to be bonded to each other to form a single body as one optical cable 300a.The plurality of optical fibers 301 to 304 may be inserted into the optical fiber insertion channel 305 of the connector plug 100, in the state where the coating layer 312 is formed in the outer periphery, as shown in FIGS. 8A, 8B, and 11C.

In this case, the diameter of each of the plurality of optical fibers 301 to 304 can be applied to 400 µm or so, and even if using the optical fibers 301 to 304 of the diameter of 400 µm or so, the overall thickness of the connector plug 100 can be realized as slim as 1 mm or so.

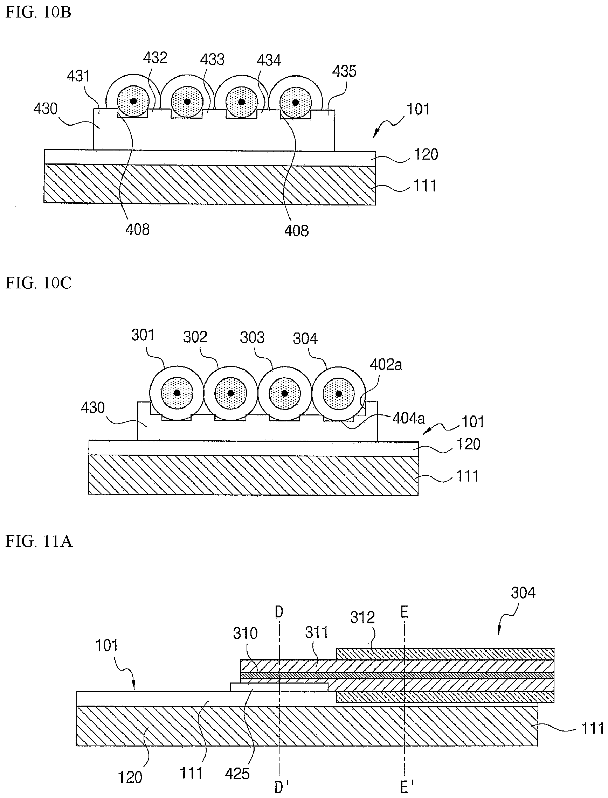

When the optical fibers 301 to 304 are inserted into the optical fiber insertion channel 305 of the connector plug 100 in a state where the coating layer 312 is formed on the outer circumference, the broad optical fiber seating grooves 172 may be formed as shown in FIGS. 11A and 11C.

The optical fiber insertion channel 305 formed in the connector plug 100 may support the optical fibers 301 to 304 having a diameter of 400 µm individually or entirely like the third and fourth embodiments shown in FIGS. 8A and 8B, or may support the optical fiber lines 301a to 304a having a diameter of 125 µm and the optical fibers 301 to 304 having a diameter of 400 µm at the same time, at the front end and rear end thereof, like the fifth embodiment as shown in FIGS. 9A and 9B.

In the third embodiment shown in FIG. 8A, the optical fiber alignment guides 410a, 410b, and 412d to 412f required to individually support the optical fibers 301 to 304 are formed on the wiring layer 120 of the optical device module 101, while, in the fourth embodiment shown in FIG. 8B, the optical fiber alignment guides 410a and 410b required to support the entire optical fibers 301 to 304 are formed on the wiring layer 120 of the optical device module 101.

In the fifth embodiment shown in FIGS. 9A and 9B, the optical fiber alignment guides 421 to 425 are formed at the same interval at the front ends in which the optical fiber lines 301a to 304a are received, to form four optical fiber seating grooves 406 for respectively receiving the optical fiber lines 301a to 304a on the wiring layer 120 of the optical device module 101, and the optical fiber alignment guides 420, which forms one optical fiber seating groove, are formed at both sides at an interval at the rear ends in which the optical fibers 301 are received so as to receive the entire optical fibers 301 to 304 on the wiring layer 120.

Accordingly, the optical fiber lines 301a to 304a having a diameter of 125 µm are arranged at the front end thereof, and the optical cable 300a having optical fibers 301 to 304 having a diameter of 400 µm may be stably supported at the rear end thereof.

In addition, in the seventh embodiment shown in FIGS. 11A through 11C, when the optical fiber insertion channel 305 is formed, the optical fiber alignment guides 421 through 425 are formed at the front end in which the optical fiber lines 301a to 304a are received so as to form four optical fiber seating grooves 406 for respectively receiving the optical fiber lines 301a to 304a on the wiring layer 120 of the optical device module 101, and an optical fiber dielectric groove 402 for receiving the entire optical fiber 301 to 304 by etching the wiring layer 120 is formed at the rear end in which the optical fibers 301 to 304 are received.

In this case, at both sides of the optical fiber mounting groove 402 may include an optical fiber alignment guide 410a protruding from the wiring layer 120 and supporting both sides of the optical fibers 301 to 304.

The seventh embodiment has an advantage capable of minimizing the mounting height while even supporting the optical fiber lines 301a to 304a and the optical fibers 301 to 304 at the same time since the optical fiber lines 301a to 304a and the optical fiber seating groove supporting the optical fibers 301 to 304 have a step difference. The optical fiber seating groove 402 formed by etching the wiring layer 120 serves as a stopper for limiting the insertion positions of the optical fibers 301 to 304.

Moreover, in the sixth embodiment shown in FIGS. 10A-10C, when the optical fiber insertion channel 305 is formed, the feature in which the optical fiber lines 301a to 304a and the seating groove supporting the optical fibers 301 to 304 have a step difference is the same as that of the seventh embodiment. However, the optical fiber insertion channel 305 may be formed in a separate optical fiber fixing block 430, and the separate optical fiber fixing block 430 may be bonded and fixed on the wiring layer 120 of the optical device module 101, or the optical fiber insertion channel 305 may be formed in a single body after forming and then patterning a polymer layer on the wiring layer 120.

The optical fiber alignment guides 431 to 435 are formed in the optical fiber fixing block 430 to form four optical fiber seating grooves 408 for receiving the optical fiber lines 301a to 304a, respectively, at the front end of the optical fiber fixing block 430, in which the optical fiber lines 301a to 304a are received, and At the rear end in which the optical fibers 301 to 304 are received, are formed an optical fiber seating groove 402a for accommodating the entire optical fibers 301 to 304by etching the optical fiber fixing block 430, and four small-sized optical fiber seating grooves 404a for receiving a portion of the lower end portion of each of the optical fibers 301 to 304.inside the optical fiber seating groove 402a.

As described above, the method of assembling and fixing the optical fiber lines 301a to 304a and the optical fibers 301 to 304 to the optical fiber insertion channel 305 may employ a method comprising the steps of: initially filling an epoxy or polyimide-based adhesive in an inlet of the optical fiber insertion channel 305 by a predetermined capacity, picking a plurality of optical fiber lines 301a to 304a or optical fibers 301 to 304 one by one by using pick-and-push equipment, to then be pushed into the optical fiber insertion channel 305, and then irradiating heat or ultraviolet (UV) light thereto to cure an adhesive.

The connector plug 100 may be configured to support one or more optical channels. In an embodiment having a plurality of optical channels, the connector plug 100 may include an optical component 171 for transmission and reception and a corresponding transmission/reception component of the light engine 110.

As described above, the connector plug 100 manufactured in the semiconductor package type may be implemented to have the data transmission standard of the high-definition multimedia interface (HDMI) as an external connection terminal 160 is formed in the form of a conductive strip on the outer surface of the optical device module 101.

In this case, the external connection terminal 160 is formed to protrude on the outer surface of the optical device module 101, or the external connection terminal 160 may be formed at the same level as the outer surface of the optical device module 101.

In this case, as the optical device module 101 forms a system-in-package (SiP) in a FOWLP method using a semiconductor manufacturing process, the mold body 111 and the wiring layer 120 can be formed to be a thin film of 200 µm and 100 µm thick, respectively. The optical fiber alignment guide members are manufactured to accommodate the optical fibers 301 to 304 having a diameter of 400 µm, so that the connector plug 100 of the present invention is implemented to have a thickness of 1 mm and is generally manufactured in a small size.

An active optical cable (AOC) assembly according to a second embodiment of the present invention will be described with reference to FIGS. 6 and 7.

A connector plug 100a used in an active optical cable (AOC) assembly according to the second embodiment includes: an optical device module 101 having a light engine 110 for generating an optical signal or receiving an optical signal therein; first and second block guides 450 and 452 defining first and second installation areas 460 and 462 for positioning an optical fiber fixing block 430 and an optical component alignment guide 400; the optical fiber fixing block 430 installed in the first installation area 460 and having a plurality of optical fiber seating grooves 408 formed therein to receive and support the optical fibers 301 to 304 from which a plurality of optical fiber lines 301a to 304a are exposed at the front end thereof; an optical component 171 for transmitting the optical signal between the optical fibers and the light engine 110; and an optical component alignment guide 400 installed in the second installation area 462 and serving as a stopper for supporting one end of the optical component 171.

The plurality of optical fiber seating grooves 408 serve as the same role as the optical fiber insertion channel 305 having an open structure in which the plurality of optical fibers 301 to 304 of the first embodiment are seated.

The first and second block guides 450 and 452 are formed so that a pair of partition protrusions 454 protrude to face each other to define first and second installation areas 460 and 462, and A plurality of optical lenses 124 are formed at intervals on the wiring layer 120 of the optical device module 101 in correspondence to the optical fibers 301 to 304 assembled inside the pair of partition protrusions 454.

In the second embodiment, the optical component 171 may be composed of a reflective mirror and the optical fibers 301 to 304 are assembled and fixed to the optical fiber fixing block 430. The optical component 171 is slantly temporarily assembled using the optical component alignment guide 400 and the optical fibers 301 to 304, in the state in which the optical component alignment guide 400 has been installed, and then the optical component 171 is fixed using an adhesive.

In addition, the optical component 171 may employ a right angle prism that converts the path of the optical signal by 90° instead of adopting the reflective mirror.

Therefore, the same elements of the second embodiment as those of the first embodiment are given the same reference numerals as those of the first embodiment, and a detailed description thereof will be omitted.

In FIG. 7, the unexplained reference numeral 320 refers to a support holder that is installed so that a plurality of optical fibers 301 to 304 each having a cylindrical structure can be supported in a larger area on the seating surface of the fiber optical fixing block 430, which is a flat surface.

When the active optical cable (AOC) assembly according to the second embodiment is compared with that of the first embodiment, the optical device module 101 of the second embodiment differs from that of the first embodiment in that the optical fiber alignment guide member required to fix the optical fibers 301 to 304 exposed by the optical fiber lines 301a to 304a is not directly formed on the upper part of the wiring layer 120 and is formed in the optical fiber fixing block 430, and then assembled to the optical device module 101.

As a result, the active optical cable (AOC) assembly according to the second embodiment can reduce the manufacturing process time by assembling the previously manufactured optical fiber fixing block 430 to the optical device module 101 instead of directly forming the optical fiber alignment guide member on the upper part of the wiring layer 120.

In the second embodiment, when the plurality of optical fibers 301 to 304 are assembled to a connector plug 100a, the plurality of optical fibers 301 to 304 can be mounted in a pick-and-place or pick-and-push method, thereby facilitating assembly.

Also, in the second embodiment, the optical fiber fixing block 430 and the optical component alignment guide 400 are assembled to the first and second installation areas 460 and 462 defined by the first and second block guides 450 and 452, and then the optical fibers 301 to 304 are assembled to the optical fiber fixing block 430, and the optical component 171 can be slantingly assembled using the optical component alignment guide 400 and the optical fibers 301 to 304.

Thus, in the second embodiment, the alignment between the optical device and the optical component by assembling the optical device 130 and the optical component 171, and the alignment between the optical component 171 and the optical fibers 301 to 304 can have high accuracy with no misalignment even in the case of using an individual optical component 171 even if the alignments use an inexpensive passive alignment technique.

FIG. 15 is a longitudinal cross-sectional view of a connector plug in which optical fibers and optical components are assembled using an optical fiber alignment guide member and an optical component alignment guide formed in the optical device module, according to an eighth embodiment of the present invention.

A connector plug 100b used in an active optical cable (AOC) assembly according to the eighth embodiment includes: an optical device module 101 which is manufactured in a system-in-package (SiP) form so as to include a light engine 110 for generating or receiving an optical signal therein; an optical fiber alignment guide member 410 integrally formed on one surface of the optical device module 101 to automatically align and position an optical device 130 of the light engine 110 and a plurality of optical fibers 301 to 304 to form an optical fiber insertion channel 305 having an open structure on which the plurality of optical fibers 301 to 304 are seated; an optical component 172 arranged at an orthogonal position between the optical device 130 of the light engine 110 and the optical fiber lines 301a to 304a of the optical fibers 301 to 304 to transmit an optical signal between the optical fibers 301 to 304 and the light engine 110; and an optical component alignment guide 400 for aligning the optical component 172 to be arranged at the orthogonal point between the optical device 130 of the light engine 110 and the optical fiber lines 301a to 304a of the optical fibers 301 to 304.

The connector plug 100b according to the eighth embodiment has the same basic structure as the connector plug 100 of the first embodiment shown in FIGS. 2 to 4, except that the optical component 172 is used instead of the optical component 171 for transmitting the optical signal between the optical fibers 301 to 304 and the light engine 110.

In the explanation of the eighth embodiment, the same part as the connector plug 100 of the first embodiment imparts the same reference numeral, and a detailed description thereof will be omitted.

The optical component 171 of the first embodiment serves as an optical path converting element arranged at an orthogonal point between the optical device 130 of the light engine 110 and the optical fibers 301 to 304 to reflect or refract the optical signal to convert the optical signal by 90°. For example, a reflective mirror is adopted as the optical component by forming a metal layer 171a in a planar silicon substrate, or a resin substrate 171, the reflective mirror having a special reflection of incident light.

In the eighth embodiment, the optical component 172 includes a prism arranged at an orthogonal point between the optical device 130 of the light engine 110 and the optical fiber lines 301a to 304a of the optical fibers 301 to 304, and may employ a right angle prism capable of serving as an optical path conversion element for converting the optical signal path by 90° to transmitting light between the optical device of the light engine 110 and the optical fiber line 301a to 304a of the optical fibers 301 to 304.

The right angle prism may be made of a transparent glass or acryl as a total reflection prism in which a cross section is a two-isosceles right triangle, and in the right angle prism ABC shown in FIG. 15, the light incident perpendicularly to the side AB or the side AC may be emitted at an angle of deviation by 90° from the side BC.

The optical component alignment guide 400 plays a role of aligning the optical component 172, that is, a right angle prism, at an orthogonal point between the optical device 130 of the light engine 110 and the optical fiber lines 301a to 304a of the optical fibers 301 to 304. That is, when one side AC of the right angle prism ABC is mounted on one surface of the optical device module 101, the side AB contacts the front end of the optical fiber alignment guide member 410 and the edge C is restricted to the optical component alignment guide 400. That is, the right angle prism ABC is inserted into the optical fiber alignment guide member 410 and the optical component alignment guide 400 to fix the position thereof, and may be fixed by using a method of applying an epoxy or polyimide-based adhesive to the contact point and irradiating heat or UV light to cure the adhesive.

In this case, the optical component alignment guide 400 serves as a stopper for supporting the right angle prism ABC.

As described above, the connector plug 100b according to the eighth embodiment may assemble the optical fiber 301 to 304 or the optical fiber lines 301a to 304a to the optical fiber insertion channel 305 integrally formed on one surface of the optical device module 101, and assemble the optical component 172 between the optical component alignment guide 400 and the optical fiber alignment guide member 410, and thus the alignment between the optical device and the optical component by assembling the optical device 130 and the optical component 172, and the alignment between the optical component 172 and the optical fibers 301 to 304 can have high accuracy with no misalignment even in the case of using an individual optical component 172 even if the alignments use an inexpensive passive alignment technique without using active alignment.

In the above description of the embodiment, the first connector plug connected to one end of the optical cable has been described, but a second connector plug connected to the other end of the optical cable may have the same configuration. However, when the optical device of the light engine included in the first connector plug uses a laser diode that generates an optical signal, the optical device of the light engine included in the second connector plug uses a photodiode that receives an optical signal. In this matter, there is a difference between the first connector plug and the second first connector plug.

The connector plug according to an embodiment of the present invention comprises an external connection terminal 160 in the form of a plurality of conductive strips, solder balls, or metal bumps that meet one of the data transmission standards so as to interconnect a terminal with another terminal while forming an active optical cable (AOC).

In addition, the external connection terminal 160 of the connector plug may be variously modified in addition to the data transmission standard.

When the external connection terminal 160 is formed of a plurality of conductive strips, the connector plug 100 according to an embodiment of the present invention can be applied to the case where the connector plug 100 is physically attached to and detached from the mating port 12 of the terminal 10 as shown in FIG. 1.

The case where the external connection terminal 160 is formed in the form of solder balls or metal bumps can be applied to: in one terminal, a board-to-board interconnection between a board and another board; a chip-to-chip interconnection between a chip and another chip; a board-to-chip interconnection between a board and a chip; or an on-board interconnection connecting between a terminal main board and a peripheral I/O device.

In this case, the connector plug 100 is soldered and fixedly coupled to the conductive electrode pads formed on the board using solder balls or metal bumps as one chip instead of physically detachable coupling to the mating port 12.

As described above, the omission of physical mating port-connector plug coupling results in on-board interconnection without going through electrical I/O interfacing or optical interfacing.

As a result, by minimizing the signal path when the on-board mutual connection is made, the signal path and jitter can be reduced, the signal integrity can be improved, the data error generated by the parasitic current component on the signal path can be reduced, and the engineering cost can be reduced by reducing the overall board development operation.

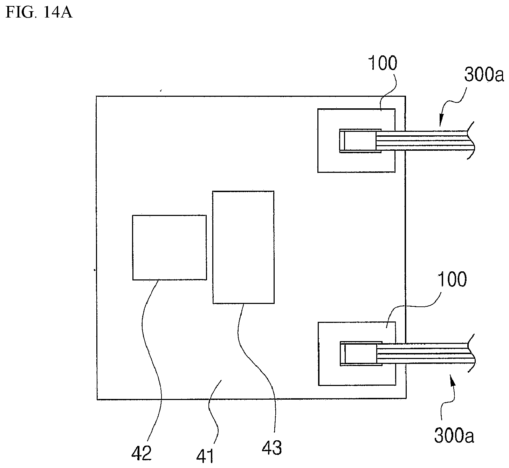

FIGS. 14A and 14B are a plan view and a cross-sectional view, respectively, showing an applied embodiment in which a connector plug of the present invention is on-board-interconnected to a board.

Referring to FIGS. 14A and 14B, an on-board interconnection structure in which the connector plug according to the applied embodiment is mounted directly on a board is the case that an external connection terminal 160 of a connector plug 100 made of solder balls or metal bumps is fixedly coupled to a conductive electrode pad formed on a board 41 constituting, for example, a field programmable gate arrays (FPGA), a DSP, a controller, or the like.

That is, after matching the external connection terminal 160 made of solder balls or metal bumps with the conductive electrode pad formed on the board 41, the interconnection between the connector plug 100 and the board 41 is made through a reflow process. In this case, the electrode pad of the board 41 coupled to the solder ball of the external connection terminal 160 may be formed of, for example, a ball grid array (BGA), a quad flat non-leaded package (QFN), or the like.

The board 41 may be, for example, a printed circuit board (PCB) used to configure an FPGA, a complex programmable logic device (CPLD), or the like and a plurality of integrated circuit (IC) chips 43 and electronic components 42 may be mounted on the board 41.

FPGAs are generally applied in functional systems in a variety of fields, including digital signal processors (DSPs), early ASICs, software-defined radios, voice recognition, and machine learning systems. One or two connector plugs 100 may be directly coupled to the board 41, and may serve to directly connect these the functional systems to other functional boards (systems) or terminals through the optical cable 300a, respectively.

Furthermore, a connector plug 100 or active optical cable (AOC) assembly having an external connection terminal 160 made of solder balls or metal bumps is transponder chip having both an electro-optical conversion function and an opto-electric conversion function. Integrated circuit (IC) chips having a plurality of different functions are integrated into a single package in a system-in-package (SiP) form, various functions are embedded in a single chip, including the connector plug 100 in the form of a system on chip (SOC), or the package may be made in the form of a system on board (SoB) or a package on package (PoP).

An integrated circuit (IC) chip or functional device that may be packaged together in the form of SiP, SoC, SoB or PoP may include: for example, as a processor having a signal processing function, an integrated circuit chip of a CPU (Central Processing Unit), a Micro Processor Unit (MCU), a Digital Signal Processor (DSP), and an Image Signal Processor (ISP); and an integrated circuit chip, such as a vehicle electronic control unit (ECU), an autonomous vehicle, an artificial intelligence (AI), etc., which requires a plurality of integrated circuits (ICs) for various multi-functional processing.

While the present invention has been particularly shown and described with reference to exemplary embodiments thereof, by way of illustration and example only, it is clearly understood that the present invention is not to be construed as limiting the present invention, and various changes and modifications may be made by those skilled in the art within the protective scope of the invention without departing off the spirit of the present invention.

### INDUSTRIAL APPLICABILITY

The present invention can configure an active optical cable (AOC PGM) assembly using a connector plug which can easily perform passive alignment of an optical component, and can be applied to an active optical cable (AOC) used for data transmission between a board and another board, and between an UHDTV class TV and a neighboring device by enabling mass data transmission and reception at an ultra-high speed of several tens giga to 100G or more.

## Claims

1. A connector plug comprising:
an optical device module having a light engine for generating an optical signal or receiving an optical signal therein;
an optical fiber alignment guide member formed on one surface of the optical device module to form an optical fiber insertion channel having at least one optical fiber seated thereon; and
an optical component provided in the optical device module to transmit an optical signal between the optical fiber and the light engine.

2. The connector plug of claim 1, wherein the optical component is a reflective mirror installed slantly at an angle of 45° to the surface of the optical device module.

3. The connector plug of claim 2, wherein the reflective mirror is a metal layer formed on a planar silicon substrate or resin substrate.

4. The connector plug of claim 1, further comprising an optical component alignment guide installed in the optical device module and arranged at a predetermined distance from the optical fiber alignment guide member such that the optical component is arranged at an orthogonal point between the optical device of the light engine and the optical fiber.

5. The connector plug of claim 4, wherein one edge of the reflective mirror comes in contact with the surface of the optical device module and the other edge thereof comes in contact with the upper edge of the optical component alignment guide, in which the one edge of the reflection mirror is positioned at a point spaced apart from the front end of the optical component alignment guide by a distance equal to the height of the optical component alignment guide.

6. The connector plug of claim 1, wherein the optical component is a 45° reflective mirror or a concave type mirror having a reflective surface formed in a concave shape.

7. The connector plug of claim 1, wherein the optical component is a right angle prism arranged at an orthogonal point between the optical device of the light engine and the optical fiber.

8. The connector plug of claim 7, further comprising an optical component alignment guide member that serves as a stopper for aligning the right angle prism at an orthogonal point between the optical device of the light engine and the optical fiber.

9. The connector plug of claim 1, wherein the optical fiber alignment guide member arranges the optical fiber mounted on the optical fiber insertion channel on the same line as the optical device of the light engine.

10. The connector plug of claim 1, wherein the optical component is an optical path conversion element that converts the optical signal path by 90° and transmits light between the optical device of the light engine and the optical fiber.

11. The connector plug of claim 1, wherein the optical fiber alignment guide member includes a plurality of optical fiber alignment guides arranged at the same interval to form a plurality of optical fiber insertion channels into which the plurality of optical fibers are inserted.

12. The connector plug of claim 11, further comprising a plurality of stopper protrusions formed at front end portions of the plurality of optical fiber insertion channels, respectively, to define a point at which the front end portion of the optical fiber is to be positioned when the optical fiber is assembled by a pick-and-push method.

13. The connector plug of claim 11, wherein an optical device array integrated circuit (IC) is embedded in the optical device module such that the plurality of optical devices are arranged at a predetermined distance from the respective front end portions of the plurality of optical fiber insertion channels.

14. The connector plug of claim 13, further comprising a plurality of optical lenses arranged on the surface of the optical device module having the plurality of optical devices embedded therein to control the path of the light so that the light generated from the optical device is focused on the optical component.

15. The connector plug of claim 1, wherein the optical component is an optical path conversion member arranged at an orthogonal point between the optical device of the light engine and the optical fiber to reflect or refract the optical signal to transfer the optical signal between the optical fiber and the light engine, thereby converting the path of the optical signal into 90°.

16. The connector plug of claim 1, wherein the optical device module comprises:
a light engine encapsulated by a mold body;
an external connection terminal electrically connected to the outside; and
a wiring layer for interconnecting the external connection terminal and the light engine.

17. The connector plug of claim 16, wherein the external connection terminal is formed on a first surface of the mold body, and the wiring layer may be formed on a second surface of the mold body and further comprises a conductive vertical via formed through the mold body to interconnect the external connection terminal and the wiring layer.

18. A connector plug comprising:
an optical device module having a light engine for generating or receiving an optical signal by an optical device encapsulated therein;
first and second block guides formed on one surface of the optical device module and defining first and second mounting regions in a longitudinal direction;
an optical fiber fixing block installed in the first mounting region and having an optical fiber insertion channel on which at least one optical fiber is seated on an upper surface thereof;
an optical component for transmitting the optical signal between the optical fiber and the light engine; and
an optical component alignment guide installed in the second mounting region and supporting one end of the optical component.

19. The connector plug of claim 18, further comprising a pair of partition protrusions protruding to face the inside of the first and second block guides to define the first and second mounting regions; and at least one optical lens formed inside the pair of partition protrusions at intervals corresponding to at least one optical fiber seated on the optical fiber insertion channel.

20. An active optical cable (AOC) assembly comprising:
a connector plug having an optical fiber insertion channel; and
an optical cable having at optical fiber coupled to the optical fiber insertion channel, wherein the connector plug is a connector plug according to any one of claims 1 to 19.
